# EUROPÄISCHE PATENTSCHRIFT

(11) **EP 3 448 706 B1**
(45) Veröffentlichungstag und Bekanntmachung des Hinweises auf die Patenterteilung: **12.08.2020**
(21) Anmeldenummer: 17724746.7
(22) Anmeldetag: 25.04.2017
(51) Int. Cl.: B60K 6/40

(54) **HYBRIDMODUL UND ANTRIEBSANORDNUNG FÜR EIN KRAFTFAHRZEUG**
HYBRID MODULE AND A DRIVE ARRANGEMENT FOR A MOTOR VEHICLE
MODULE HYBRIDE ET SYSTÈME D'ENTRAÎNEMENT POUR UN VÉHICULE À MOTEUR

(30) Priorität: 27.04.2016 DE 102016207104; 23.11.2016 DE 102016223135
(43) Veröffentlichungstag der Anmeldung: 06.03.2019
(73) Patentinhaber: Schaeffler Technologies AG & Co. KG, 91074 Herzogenaurach (DE)
(72) Erfinder: KELLER, Aurelie, 67850 Herrlisheim (FR); REIMNITZ, Dirk, 77815 Bühl (DE); BAUMANN, Michael, 77886 Lauf (DE)
(86) Internationale Anmeldenummer: PCT/DE2017/100337
(87) Internationale Veröffentlichungsnummer: WO 2017/186227

(56) Entgegenhaltungen:
- WO-A1-2012/079697
- WO-A2-2012/083912
- DE-A1-102014 209 833
- FR-A1- 2 830 589

## Beschreibung

Die Erfindung betrifft ein Hybridmodul für ein Kraftfahrzeug, wie einen Pkw, einen Lkw oder ein anderes Nutzfahrzeug, zum Ankoppeln an ein Antriebsaggregat, beispielsweise an eine Verbrennungskraftmaschine gemäß dem Oberbegriff des Patentanspruchs 1.

Zurzeit erhältliche Hybridmodule, die durch Ankopplung einer Verbrennungskraftmaschine an einen Antriebsstrang eines Fahrzeugs einen Elektromotorbetrieb mit einem Verbrennungsmotorbetrieb kombinieren können, bestehen meist aus einem Elektromotor, einer Trennkupplung, deren Betätigungssystem, Lager und Gehäusekomponenten, die die drei Hauptkomponenten zu einer funktionstüchtigen Einheit verbinden. Der Elektromotor ermöglicht das elektrische Fahren, Leistungszuwachs zum Verbrennungsmotorbetrieb und Rekuperieren. Die Trennkupplung und deren Betätigungssystem sorgen für das Ankuppeln oder Abkuppeln des Verbrennungsmotors.

Bei Kraftfahrzeugen mit Hybridsystemen und insbesondere sogenannten P2-Hybridsystemen, sind zwischen der Verbrennungskraftmaschine und dem Getriebe der Elektromotor und mindestens ein Drehmomentübertragungselement angeordnet. Zudem sind meistens im Kraftfluss zwischen der Verbrennungskraftmaschine und dem Elektromotor ein drehschwingungsdämpfendes Element (z.B. ein Zwei-Massen-Schwungrad) und eine Trennkupplung angeordnet, durch die die Verbrennungskraftmaschine zugeschaltet oder abgekoppelt werden kann. Das Drehmoment, das vom Verbrennungs- und/oder Elektromotor erzeugt wird, kann dann durch ein weiteres regelbares Drehmomentübertragungselement z.B. eine Kupplung, eine Doppelkupplung oder ein Drehmomentwandler auf das Getriebe übertragen werden.

Um diese verschiedenen Aggregate und Komponenten platzsparend anzuordnen und funktionell miteinander zu verbinden, wird bei derartigen Hybridsystemen als Drehmomentübertragungselement eine Welle zwischen der Kurbelwelle der Verbrennungskraftmaschine und der Getriebeeingangswelle angeordnet. Diese sogenannte Zwischenwelle dient dazu, das Drehmoment von der Verbrennungskraftmaschine auf das Getriebe zu übertragen, wenn die Fahrsituation dies erfordert. Zusätzlich oder alternativ kann über die Zwischenwelle Drehmoment von der elektrischen Maschine auf die Verbrennungskraftmaschine übertragen werden um ihn zu starten oder dessen Bremswirkung mit dem Prinzip der Motorbremse zu nutzen.

Ein Fahrzeug mit einem Hybridmodul, beispielsweise mit einem P2-Hybridmodul, bietet mehr Fahrzustände als ein konventionelles Fahrzeug mit Verbrennungskraftmaschine oder ein reines Elektrofahrzeug. Allerdings müssen auch deutlich mehr Teile unterschiedlich drehbar gelagert und miteinander gekoppelt oder entkoppelt werden.

Daher werden bei einem Hybridmodul auch mehr Lager, insbesondere Wälzlager, zwischen der Verbrennungskraftmaschine und dem Getriebe eingesetzt, als bei konventionellen Fahrzeugen. Alle Lager erzeugen prinzipbedingt Schleppverluste, die sich beispielsweise durch Lagerreibung in Form von Schleppmomenten und Lagererwärmung bemerkbar machen. Bei Hybridfahrzeugen ist es wegen der hohen Effizienzanforderungen wichtig, die Lagerverluste so klein wie möglich zu halten.

Gleichzeitig müssen die Lager der Zwischenwelle von außen auf die Zwischenwelle einwirkenden axialen und radialen Kräfte, so wie Kippmomente, Gewichtskräfte und Trägheitskräfte, z.B. bedingt durch Beschleunigungen und Kreiselkräfte, abstützen bzw. weiterleiten.

Aus der FR 2 830 589 A1 ist ein Hybridmodul gemäß dem Oberbegriff des Patentanspruchs 1 bekannt.

Bezüglich weiteren Standes der Technik wird auf die WO 2012/079697 A1 und die DE 20 2014 209833 A1 verwiesen.

Hiervon ausgehend liegt der vorliegenden Erfindung die Aufgabe zugrunde, ein Hybridmodul sowie eine Antriebsanordnung für ein Kraftfahrzeug zur Verfügung zu stellen, die eine hohe Lebensdauer mit geringen, durch Rotationslagerungen verursachten Verlusten kombinieren.

Diese Aufgabe wird durch das erfindungsgemäße Hybridmodul nach Patentanspruch 1 gelöst. Vorteilhafte Ausgestaltungen des erfindungsgemäßen Hybridmoduls sind in den Unteransprüchen angegeben.

Die Begriffe radial, axial und Umfangsrichtung beziehen sich im Rahmen der vorliegenden Erfindung immer auf die Rotationsachse des Hybridmoduls. Der zur Drehlagerung des Rotors dienende Rotorlagerträger ist vorzugsweise in Bezug zu einem Gehäuse des Hybridmoduls fest angeordnet, so dass die Rotoreinheit und der Rotorlagerträger in Bezug zueinander rotierbar ausgestaltet sind. Zu diesem Zweck sind vorteilhafterweise zwischen der Rotoreinheit und dem Rotorlagerträger weitere Lager angeordnet, die die Rotation ermöglichen.

Die Rotoreinheit umfasst den Rotor, so dass sie die Rotationsbewegung des Rotors im Stator ausführt. Die Rotationseinheit kann verschiedene Komponenten aufweisen, die mechanisch an den Rotor gekoppelt sind, wie z.B. Komponenten einer Reibkupplung.

Die Abstützung ist hier derart zu verstehen, dass die von der Zwischenwelle in das Lager eingetragene Kraft von diesem Lager auf das betreffende Bauteil übertragen wird, welches diese Kraft aufnimmt, wobei die Anordnung von herkömmlichen Zwischenelementen wie z.B. Beschichtungen oder Distanzelementen nicht von dieser Definition ausgeschlossen sein sollen.

Vorteilhaft weist eines des ersten Lagers und des zweiten Lagers eine Funktion eines Festlagers auf und weist ein anderes des ersten Lagers und des zweiten Lagers eine Funktion eines Loslagers auf bzw. ist das eine des ersten Lagers und des zweiten Lagers ein Festlager und ist das andere des ersten Lagers und des zweiten Lagers ein Loslager.

Weiterhin kann ein Bestandteil der Rotoreinheit eine Trennkupplung sein, mit der von einer Verbrennungskraftmaschine zur Verfügung gestelltes Drehmoment auf das Hybridmodul übertragbar ist und mit der das Hybridmodul von der Verbrennungskraftmaschine rotatorisch trennbar ist. Die Trennkupplung umfasst dabei eine Gegenplatte zur Aufbringung einer Gegenkraft zur von einer Anpressplatte der Trennkupplung aufgebrachten Anpresskraft zur Erzeugung eines Reibmoments an einer Reibscheibe der Trennkupplung, wobei sich das zweite Lager an der Gegenplatte abstützt. Die Gegenplatte ist somit ein mit dem eigentlichen Rotor oder Läufer der elektrischen Maschine rotatorisch fest verbundenes Element, welches der Abstützung der Zwischenwelle dient.

In einer weiteren vorteilhaften Ausgestaltung des Hybridmoduls ist vorgesehen, dass die Gegenplatte radial innen eine Öffnung aufweist, deren maximale radiale Erstreckung größer ist als die der Zwischenwelle, so dass bei der Montage die Zwischenwelle durch diese Öffnung hindurchführbar ist. Dies ermöglicht es, die Baugruppe, umfassend den Rotor des Elektromotors, den Rotorträger, die Trennkupplung und das Trennkupplungsbetätigungssystem, komplett zu montieren und die Funktion der Kupplung zu testen, bevor die Zwischenwelle montiert wird.
Fig. 1: ein Hybridmodul einer nicht erfindungsgemäßen ersten Ausführungsform,
Fig. 2: ein Hybridmodul einer nicht erfindungsgemäßen zweiten Ausführungsform,
Fig. 3: ein erfindungsgemäßes Hybridmodul einer dritten Ausführungsform,
Fig. 4: ein erfindungsgemäßes Hybridmodul einer vierten Ausführungsform,
Fig. 5: ein erfindungsgemäßes Hybridmodul einer fünften Ausführungsform.

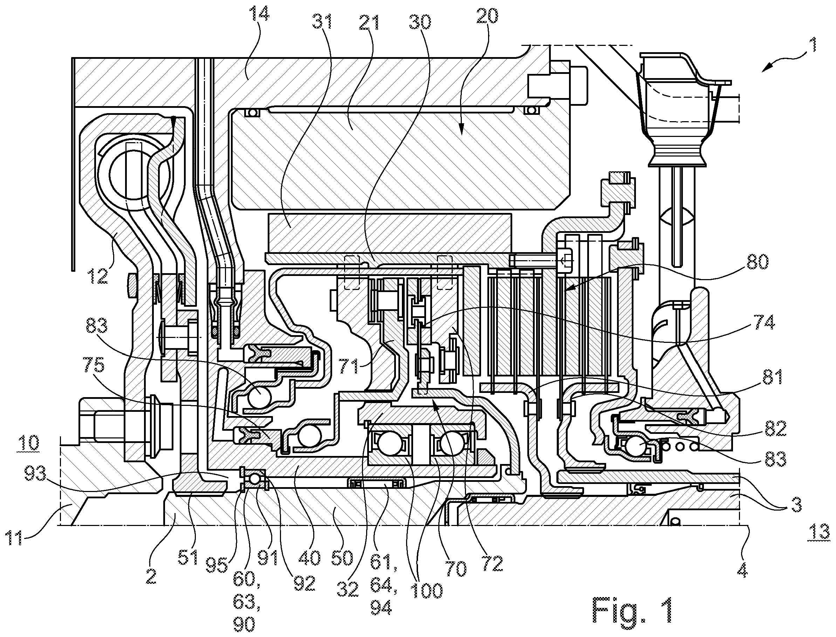

Figur 1 zeigt ein Hybridmodul mit einer besonders vorteilhaften Lagerungsvariante für die Zwischenwelle 50. Das Hybridmodul 1 umfasst eine elektrische Maschine 20 mit einem Stator 21 und einen diesbezüglich radial innen angeordneten Rotor 31. Der Rotor 31 ist Bestandteil einer Rotoreinheit 30, an dem die Windungen und/oder die Magnete des Rotors 31 aufgenommen sind und der einen radial nach innen führenden Bestandteil 32 aufweist. Die elektrische Maschine 20 ist in einem Gehäuse 14 des Hybridmoduls 1 untergebracht. In der Nähe der Position der Verbrennungskraftmaschine 10 befindet sich eine Steckverzahnung 51, mit der die Zwischenwelle 50 über einen Antrieb mit dem Zwei-Massen-Schwungrad 12 verbunden ist, welches wiederum mit einer Abtriebswelle 11 der Verbrennungskraftmaschine gekoppelt ist.

Die Rotationsbewegung des Zwei-Massen-Schwungrades 12 wird über eine Trennkupplung 70 auf die Rotoreinheit 30 übertragen. Zu diesem Zweck weist die Trennkupplung 70 eine Anpressplatte 71 sowie eine Gegenplatte 72 auf, die rotationsfest mit der Rotoreinheit 30 verbunden ist.

Die Rotation der Rotoreinheit 30 wird auf die Doppelkupplungsvorrichtung 80 und von dort auf einen getriebeseitigen Abtrieb 3 übertragen. Zu diesem Zweck weist die Doppelkupplungsvorrichtung 80 eine erste Teilkupplung 81 und eine zweite Teilkupplung 82 auf.

In dem der Verbrennungskraftmaschine zugewandten Bereich hat in der in Figur 1 dargestellten Ausführungsform die Zwischenwelle 50 ihren kleinsten Wellendurchmesser. Die radial außerhalb der Zwischenwelle 50 angeordnete Baugruppe, die den Rotorlagerträger 40 und mindestens ein Kupplungsbetätigungssystem 83 umfasst, hat auf ihrer der Verbrennungskraftmaschine zugewandten Seite ihren größten Innendurchmesser. Dieser auf der der Verbrennungskraftmaschine zugewandten Seite der Zwischenwelle 50 entstehende radiale Durchmesserunterschied der Zwischenwelle 50 und der daraus entstehende radiale Bauraum 93 dient zur Anordnung eines als Rillenkugellager 90 ausgestalteten Festlagers 63.

Die Position des Getriebes 13 zugewandte Seite der Zwischenwelle 50 dient der Anordnung eines Nadellagers 94, da dort der radiale Bauraum 93 zwischen der Zwischenwelle 50 und ihren Nachbarbauteilen gering ist.

Die beiden Lager 60,61 sind möglichst nahe an den beiden gegenüberliegenden Enden der Zwischenwelle 50 anzuordnen. Damit das Festlager 63 Axialkräfte in beide Richtungen abstützen kann, liegen sowohl der Lagerinnenring 91 als auch der Lageraußenring 92 in beiden Richtungen an einem Absatz oder an einem Befestigungselement, zum Beispiel in Form des dargestellten Wellensicherungsringes 95, an. In dem in Figur 1 dargestellten Ausführungsbeispiel sind auf beiden Seiten des Lagerinnenrings 91 des Festlagers 63 Wellensicherungsringe 95 angeordnet. Dies ermöglicht eine axiale Fixierung bei minimalem radialen Bauraumbedarf.

Alternativ ist allerdings auch eine Abstützung des als Rillenkugellager 90 ausgeführten Festlagers 63 auf der einen Seite durch einen Wellenabsatz möglich, wobei in dieser Ausführungsvariante der Nadellagerdurchmesser zu vergrößern ist, um die Montage zu ermöglichen.

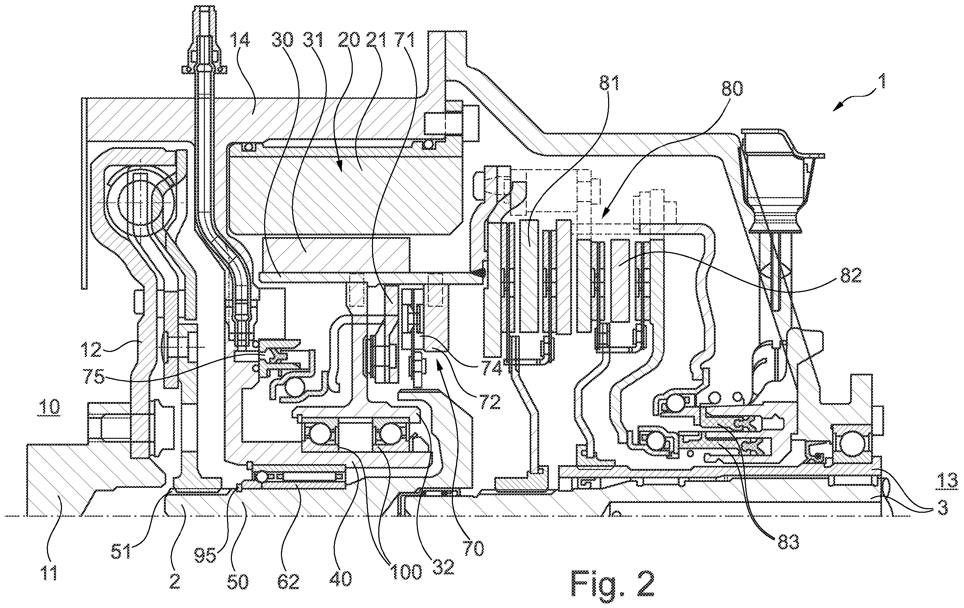

Figur 2 zeigt ein Hybridmodul 1, bei der ein geringerer Abstand zwischen den Lagern 63,64 realisiert ist als in Figur 1 dargestellt ist. Dies ist durch eine Lagerbaugruppe 62 realisiert, die zwischen der Zwischenwelle 50 und dem Rotorlagerträger 40 angeordnet ist. Die Positionen der dargestellten Lager können entgegen der Darstellung in den Figuren 1 und 2 auch vertauscht sein.

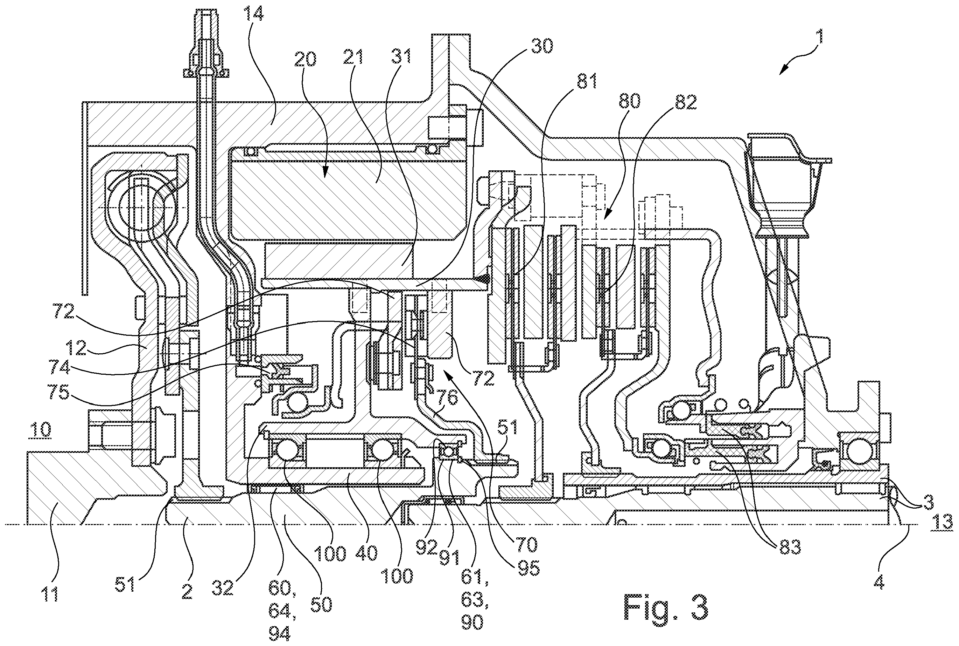

Figur 3 zeigt ein weiteres Lagerungskonzept für die Zwischenwelle 50. Hierbei ist das die Funktion eines Loslagers 64 übernehmende Lager ein Nadellager 94 und auf der der Verbrennungskraftmaschine zugewandten Seite der Zwischenwelle 50 angeordnet. Das als Rillenkugellager 90 ausgeführte Festlager 63 ist an der dem Getriebe zugewandten Seite der Zwischenwelle 50 angeordnet. Das Loslager 64 ist wie in dem in Figur 1 dargestellten Ausführungsbeispiel zwischen der Zwischenwelle 50 und dem rotatorisch feststehenden Rotorlagerträger 40 angeordnet.

Das Festlager 63 ist hier aber zwischen der Zwischenwelle 50 und dem Rotor 31 der elektrischen Maschine 20 angeordnet. Das Festlager 63 hat zwar einen größeren Durchmesser als in dem in Figur 1 dargestellten Ausführungsbeispiel, jedoch ist dies nicht nachteilig, denn bei geschlossenen Zustand der Trennkupplung 70 drehen die Zwischenwelle 50 und der Rotor 31 der elektrischen Maschine 20 mit derselben Drehzahl, so dass demzufolge keine Relativdrehzahl und somit auch keine Lagerverluste im Festlager 63 auftreten. Bei Betrachtung des gesamten Fahrzyklus kompensiert dies die potenziell höheren Verluste durch den größeren Lagerdurchmesser.

Um den Durchmesser auch bei dieser Anordnung so klein wie möglich zu halten, ist der Sitz des Festlagers 63 am Rotor 31 radial derart weit nach innen verlagert, dass gerade noch die Montage des Rotorhauptlagers 100 möglich ist.

Die Montage erfolgt wie folgt: Zuerst werden der Rotorlagerträger 40 und der Rotor 31 durch das Rotorhauptlager 100 -hier bestehend aus zwei Schrägkugellagernmiteinander verbunden.

Das Lagerspiel kann bei dieser Lagerung, die besonders steif und spielfrei laufen sollte, durch eine Wellenmutter eingestellt werden. Die Montage der Wellenmutter ist möglich, da der Lagersitz am Rotor 31, der für das noch nicht montierte Festlager 63 der Zwischenwelle 50 vorgesehen ist, so groß ist, dass die Wellenmutter durch ihn hindurch gesteckt und dann auf dem Rotorlagerträger 40 verschraubt werden kann. Nachdem das als Loslager 64 dienende Lager der Zwischenwelle 50 am Rotorlagerträger 40 und das Festlager 63 an der Zwischenwelle 50 vormontiert wurde, kann die Zwischenwelle 50 in den Rotorlagerträger 40 geschoben und durch das Befestigen des Festlagers 63 am Sitz des Rotors 31 axial fixiert werden. Der Sitz des Rotors befindet sich bei diesem Ausführungsbeispiel an dem nach radial innen führenden Bestandteil 32 der Rotoreinheit 30.

Anschließend wird ein Trennkupplungs-Verbindungselement 76 der teilbaren Trennkupplung 70 auf die Steckverzahnung 51 der Zwischenwelle 50 aufgesteckt und mit der Trennkupplungs-Reibscheibe 74 verbunden. Wenn die Zwischenwelle 50, die Trennkupplung 70 und der Rotor 31 der elektrischen Maschine 20 zu einer Baueinheit zusammengesetzt wurden, kann anschließend die Hauptkupplung des Hybridmoduls 1, die z.B. eine Doppelkupplungsvorrichtung 80 sein kann, mit dem Rotor 31 verbunden werden. Dazu weisen die in den Figuren 2 bis 5 gezeigten Ausführungsbeispiele leicht zugängliche Verbindungsstellen zwischen Rotor 31 und Kupplung auf.

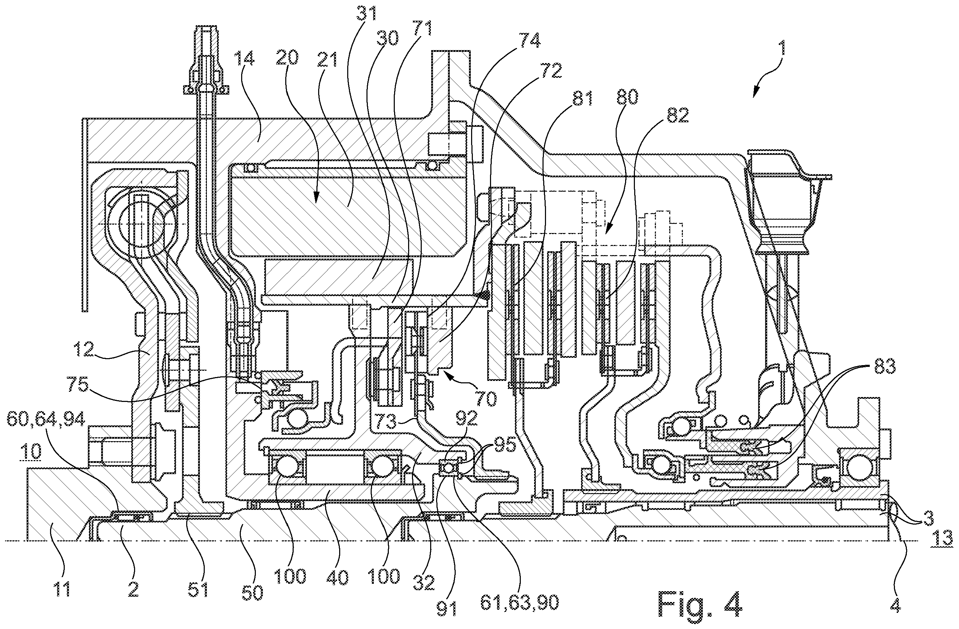

Figur 4 zeigt eine Variante des in Figur 3 dargestellten Ausführungsbeispiels. Das als Loslager 64 dienende Lager ist hier allerdings nicht zwischen der Zwischenwelle 50 und dem Rotorlagerträger 40 angeordnet, sondern zwischen der Zwischenwelle 50 und der Abtriebswelle 11 der Verbrennungskraftmaschine, die vorzugsweise eine Kurbelwelle ist. Dies reduziert die Lagerverluste, da zwischen der Abtriebswelle 11 der Verbrennungskraftmaschine und der Zwischenwelle 50, abgesehen von den Bewegungen des Drehschwingungsdämpfers, keine Relativdrehzahl auftritt.

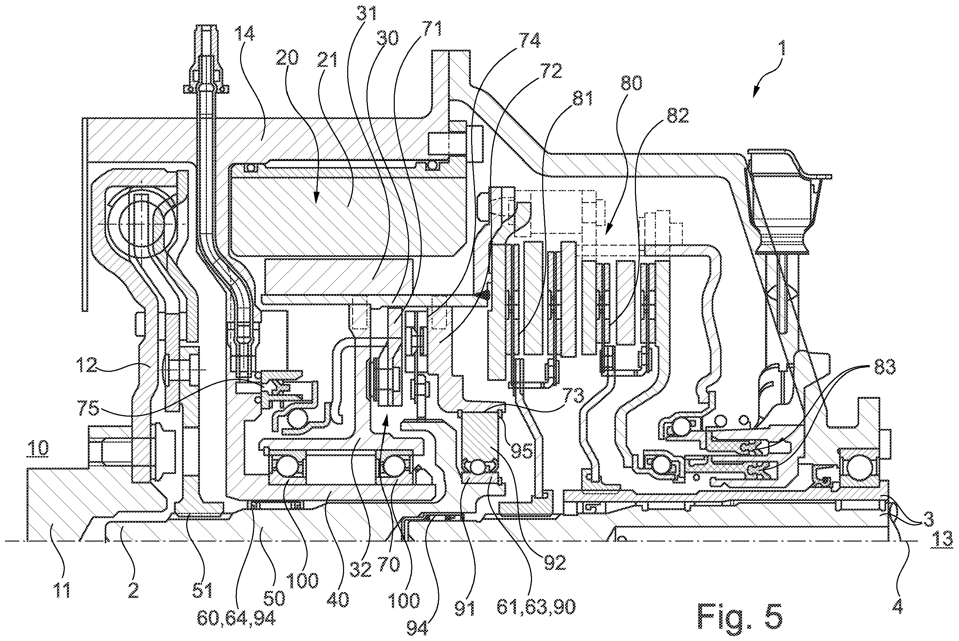

Figur 5 zeigt eine weitere Variante des Hybridmoduls 1, die dem Ausführungsbeispiel aus Figur 3 ähnelt. Auch bei diesem Ausführungsbeispiel befindet sich das Festlager 63 der Zwischenwelle 50 zwischen der Zwischenwelle 50 und dem Rotor 31. Hier ist jedoch das Festlager 63 nicht direkt mit dem nach radial innen führenden Bestandteil 32 der Rotoreinheit 30 verbunden, sondern ist indirekt über die Gegenplatte 72 der Trennkupplung 70, die ein Bestandteil der Rotoreinheit 30 ist, mechanisch mit dem Rotor 31 verbunden. Bei dieser Anordnung ist die Montage auch ohne teilbare Trennkupplungsscheibe möglich. Das Festlager 63 befindet sich auf der dem Getriebe zugewandten Seite der Steckverzahnung, die die Zwischenwelle 50 mit der Trennkupplungsscheibe verbindet. Dadurch deckt die Trennkupplungs-Reibscheibe 74 die axialen Befestigungselemente des Festlagers 63 nicht ab.

Um die Lagerverluste des Festlagers 63 zu minimieren, liegt die Lagerlaufbahn des Festlagers 63 auf einem relativ kleinen Durchmesser trotz des großen äußeren Befestigungsdurchmessers zwischen der Gegenplatte 72 und dem Festlager 63. Der große äußere Befestigungsdurchmesser der Festlagerbaugruppe bietet den großen Vorteil, dass die Gegenplatte 72 radial innen eine so große Öffnung 73 aufweist, dass die Zwischenwelle 50 durch diese Öffnung 73 hindurch geschoben werden kann. Dies ermöglicht es, die Baugruppe, umfassend den Rotor 31 des Elektromotors, den Rotorlagerträger 40, die Trennkupplung 70 und das Trennkupplungsbetätigungssystem 75 komplett zu montieren und die Funktion der Kupplung zu testen, bevor die Zwischenwelle 50 montiert wird.

Alternativ ist der Innendurchmesser der Öffnung 73 der Gegenplatte 72 kleiner als der Außendurchmesser der Zwischenwelle 50, wodurch die Gegenplatte 72 erst nach dem Einsetzen der Zwischenwelle 50 am Rotor 31 befestigt werden könnte.

Bei dem in Figur 5 gezeigten Ausführungsbeispiel wird der große äußere Befestigungsdurchmesser der Festlagerbaugruppe durch einen in Radialrichtung sehr dicken Lageraußenring 92 des Festlagers ermöglicht. Alternativ kann auch ein weiteres Bauteil zwischen dem Festlager 63 und der Gegenplatte 72 eingesetzt werden, um den radialen Abstand zu überbrücken und die beiden Bauteile miteinander zu verbinden.

Die Möglichkeit, die Lagerlaufbahn durch einen dicken Lageraußenring 92 oder ein Zwischenbauteil radial nach innen zu verlagern, trotz eines durch das

Montagekonzept vorgegebenen deutlich größeren äußeren Lagerbefestigungsdurchmessers, kann auch in den in Figuren 3 und 4 dargestellten Ausführungsbeispielen genutzt werden, um die Lagerverluste zu senken.

Ebenfalls zusätzlich oder alternativ können Nachbarbauteile auf der Zwischenwelle 50 abgestützt oder gelagert werden. Dies ist in den in den Figuren dargestellten Ausführungsformen beispielsweise für eine Getriebeeingangswelle dargestellt, die sich mit einem als Nadellager 94 ausgeführten Loslager 64 auf der Zwischenwelle 50 abstützt.

Die in den verschiedenen Ausführungsbeispielen vorgestellten Ausführungen der Festlager 63 und Loslager 64 sowie deren Anbindungen können auch beliebig miteinander kombiniert werden.

Mit der hier vorgeschlagenen Erfindung ist das erfindungsgemäße Hybridmodul mit unterschiedlichen Lageranordnungen für die Zwischenwelle ausgestaltet, die sich durch kompakte Bauweisen und geringe, durch Schleppmomente erzeugte Lagerverluste auszeichnen, da durch die erfindungsgemäße Ausgestaltung des Hybridmoduls die Lager mit sehr geringen radialen Abmessungen ausgeführt sein können und demzufolge mit einem minimalen radialen Abstand in Bezug zur Rotationsachse der Zwischenwelle angeordnet sein können.

## Patentansprüche

1. Hybridmodul (1), insbesondere Hybridmodul (1) zur Anordnung in einem Antriebsstrang eines Kraftfahrzeuges, wobei das Hybridmodul (1) aufweist:
eine elektrische Maschine (20) mit einer Rotoreinheit (30), die einen Rotor (31) der elektrischen Maschine (20) umfasst,
einen Rotorlagerträger (40) zur Drehlagerung der Rotoreinheit (30), und
eine Zwischenwelle (50) zur Übertragung eines Drehmomentes zwischen einer an das Hybridmodul anschließbaren Verbrennungskraftmaschine und einem an das Hybridmodul anschließbaren Getriebe oder Abtrieb (3), wobei
die Zwischenwelle (50) mit wenigstens einem ersten Lager (60) und einem zweiten Lager (61) drehgelagert ist,
**dadurch gekennzeichnet, dass**
sich das erste Lager (60) an dem Rotorlagerträger (40) abstützt und sich das zweite Lager (61) an der Rotoreinheit (30) abstützt.

2. Hybridmodul nach Anspruch 1, **dadurch gekennzeichnet, dass** eines des ersten Lagers (60) und des zweiten Lagers (61) eine Funktion eines Festlagers (63) aufweist und ein anderes des ersten Lagers (60) und des zweiten Lagers (61) eine Funktion eines Loslagers (64) aufweist.

3. Hybridmodul nach Anspruch 1 oder 2, **dadurch gekennzeichnet, dass**
Bestandteil der Rotoreinheit (30) eine Trennkupplung (70) ist, mit der von einer Verbrennungskraftmaschine zur Verfügung gestelltes Drehmoment auf das Hybridmodul (1) übertragbar ist und mit der das Hybridmodul (1) von der Verbrennungskraftmaschine rotatorisch trennbar ist,
die Trennkupplung (70) eine Gegenplatte (72) umfasst zur Aufbringung einer Gegenkraft zu einer von einer Anpressplatte (71) der Trennkupplung (70) aufgebrachten Anpresskraft zur Erzeugung eines Reibmoments an einer Trennkupplungs-Reibscheibe (74) der Trennkupplung (70), und
sich das zweite Lager (61) an der Gegenplatte (72) abstützt.

4. Hybridmodul nach Anspruch 3, **dadurch gekennzeichnet, dass** die Gegenplatte (72) radial innen eine Öffnung (73) aufweist, deren maximale radiale Erstreckung größer ist als die der Zwischenwelle (50), so dass bei der Montage die Zwischenwelle (50) durch diese Öffnung (73) hindurchführbar ist.

## Claims

1. A hybrid module (1), in particular a hybrid module (1) for arrangement in a drive train of a motor vehicle, the hybrid module (1) having:
an electric machine (20) having a rotor unit (30) which comprises a rotor (31) of the electric machine (20),
a rotor bearing support (40) for rotationally supporting the rotor unit (30), and
an intermediate shaft (50) for transmitting a torque between an internal combustion engine that can be connected to the hybrid module and a transmission or output (3) that can be connected to the hybrid module, wherein
the intermediate shaft (50) is rotatably supported by at least one first bearing (60) and one second bearing (61),
**characterised in that**
the first bearing (60) is supported on the rotor bearing support (40) and the second bearing (61) is supported on the rotor unit (30).

2. The hybrid module according to claim 1, **characterised in that** one of the first bearing (60) and the second bearing (61) has the function of a fixed bearing (63) and another of the first bearing (60) and the second bearing (61) has the function of a floating bearing (64).

3. The hybrid module according to claim 1 or claim 2, **characterised in that**
part of the rotor unit (30) is a separating clutch (70) with which torque provided by an internal combustion engine can be transmitted to the hybrid module (1) and with which the hybrid module (1) can be rotatably separated from the internal combustion engine,
the separating clutch (70) comprises a counter plate (72) for applying a counterforce to a contact pressure applied by a pressure plate (71) of the separating clutch (70) in order to generate a friction torque on a separating clutch friction disc (74) of the separating clutch (70), and
the second bearing (61) is supported on the counter plate (72).

4. The hybrid module according to claim 3, **characterised in that** the counter plate (72) has an opening (73) radially on the inside thereof, the maximum radial extension of which is greater than that of the intermediate shaft (50), such that the intermediate shaft (50) can be passed through this opening during assembly (73).

## Revendications

1. Module hybride (1), en particulier module hybride (1) pour l'agencement dans une chaîne cinématique d'un véhicule à moteur, le module hybride (1) comprenant :
une machine électrique (20) avec une unité formant rotor (30) qui comprend un rotor (31) de la machine électrique (20),
un support de palier de rotor (40) pour le montage en rotation de l'unité formant rotor (30) et
un arbre intermédiaire (50) pour la transmission d'un couple entre un moteur à combustion interne qui peut être raccordé au module hybride et une boîte de vitesse ou une sortie (3) qui peut être raccordée au module hybride, dans lequel
l'arbre intermédiaire (50) est monté en rotation au moyen d'au moins un premier palier (60) et un deuxième palier (61),
**caractérisé en ce que**
le premier palier (60) est supporté sur le support de palier de rotor (40) et le deuxième palier (61) est supporté sur l'unité formant rotor (30).

2. Module hybride selon la revendication 1, **caractérisé en ce que** l'un du premier palier (60) et du deuxième palier (61) a une fonction de palier fixe (63) et un autre du premier palier (60) et du deuxième palier (61) a une fonction de palier flottant (64).

3. Module hybride selon la revendication 1 ou 2, **caractérisé en ce que**
une partie de l'unité formant rotor (30) est un embrayage de séparation (70) avec lequel le couple fourni par un moteur à combustion interne peut être transféré au module hybride (1) et avec lequel le module hybride (1) peut être séparé en rotation du moteur à combustion interne,
l'embrayage de séparation (70) comprend une contre-plaque (72) pour appliquer une contre-force à une force de contact appliquée par une plaque de pression (71) de l'embrayage de séparation (70) pour générer un couple de friction sur un disque de friction d'embrayage de séparation (74) de l'embrayage de séparation (70) et
le deuxième palier (61) est supporté sur la contre-plaque (72).

4. Module hybride selon la revendication 3, **caractérisé en ce que** la contre-plaque (72) présente une ouverture (73) radialement à l'intérieur dont l'étendue radiale maximale est supérieure à celle de l'arbre intermédiaire (50), de sorte que l'arbre intermédiaire (50) puisse traverser cette ouverture lors du montage (73).
